# EUROPEAN PATENT APPLICATION

(11) **EP 2 615 667 A1**
(43) Date of publication of application: **17.07.2013**
(21) Application number: 11823520.9
(22) Date of filing: 05.09.2011
(51) Int. Cl.: H01M 4/13, H01M 2/16, H01M 10/0566

(54) **NONAQUEOUS ELECTROLYTE BATTERY**

(30) Priority: 06.09.2010 JP 2010198757
(71) Applicant: Shin-Kobe Electric Machinery Co., Ltd., Tokyo 104-0044 (JP)
(72) Inventor: TSUJIKAWA, Tomonobu, Tokyo 108-0023 (JP); ARAKAWA, Masayasu, Tokyo 110-0015 (JP); DENMA, Hirokazu, Tokyo 104-0044 (JP); HAYASHI, Koji, Tokyo 104-0044 (JP)
(74) Representative: Schiweck, Weinzierl & Koch
(86) International application number: PCT/JP2011/070144
(87) International publication number: WO 2012/033045

(57) **Abstract**

A non-aqueous electrolyte battery capable of securing safety at a time of battery abnormality and restricting a drop in a charge/discharge property at a time of battery use is provided. In a lithium-ion secondary battery 20, an electrode group 6 is accommodated in a battery container 7. The electrode group 6 is formed by winding a positive electrode plate and a negative electrode plate via a separator W5. The positive electrode plate has an aluminum foil W1 as a positive electrode collector. A positive electrode mixture layer W2 including a positive electrode active material is formed at both surfaces of the aluminum foil W1. A flame retardant layer W6 containing a flame retardant is formed at both surfaces of the positive electrode mixture layer W2. A carbon material which has electron conductivity and of whichmass ratio to the flame retardant is 25% or less is contained in the flame retardant layer W6. The negative electrode plate has a rolled copper foil W3 as a negative electrode collector. A negative electrode mixturelayer W4 including a negative electrode active material is formed at both surfaces of the rolled copper foil W3. Electron conductivity is secured at a battery use time, and the flame retardant decomposes at a battery abnormality time.

## Description

### FIELD OF THE INVENTION

The present invention relates to a non-aqueous electrolyte battery, and more particularly to a non-aqueous electrolyte battery that a positive electrode plate which a positive electrode mixture layer including an active material is formed at a collector and a negative electrode plate which a negative electrode mixture layer including an active material is formed at a collector are disposed via a porous separator.

### DESCRIPTON OF RELATED ART

As a secondary battery of which electrolyte is an aqueous solution, an alkaline battery, a lead battery or the like is known. In place of such an aqueous solution secondary battery, a non-aqueous electrolyte battery represented by a lithium secondary battery which is small, light-weighted and has high energy density is being widely used. An organic solvent such as dimethyl ether or the like is included in an electrolyte used for the non-aqueous electrolyte battery. Because the organic solvent has a property of inflammability, in a case that the battery falls into an abnormal state such as overcharge, internal shortcut and the like or that a battery temperature goes up when it is thrown into fire, behavior of the battery may become violent due to burning of a battery constituting material or a thermal decomposition reaction of an active material.

In order to avoid such a situation to secure safety of the battery, various safety techniques have been proposed. For example, a technique for making a battery non-flammable by dissolving a flame retardant (non-flammability giving material) into a non-aqueous electrolyte (See JPA 04-184870.), and a technique for making a separator non-flammable by dispersing a flame retardant into the separator (See JPA 2006-127839.) are disclosed.

### SUMMARY OF THE INVENTION

### [Problem to be solved by the Invention]

However, the techniques disclosed in JPA 04-184870 and JPA 2006-127839 are techniques for making non-flammable a battery constituting material itself such as the non-aqueous electrolyte or separator containing the flame retardant, and accordingly it is difficult to make the battery itself non-flammable. For example, in the technique disclosed in JPA 2006-127839, the separator itself can obtain non-flammability according to an amount of the flame retardant contained in the separator. In a case that this technique is applied to the lithium secondary battery, because heat generation becomes large due to a thermal decomposition reaction of an active material in the lithium secondary battery, a large amount of the flame retardant becomes necessary in order to restrict an increase in a battery temperature. Further, in the separator in which a large amount of the flame retardant is contained, it may cause a drawback in that it is difficult to retain strength originally required as a separator.

In view of the above circumstances, the present invention is to provide a non-aqueous electrolyte battery capable of securing safety at a time of battery abnormality and restricting a drop in a charge/discharge property at a time of battery use.

### [Means for solving the Problem]

In order to solve the above problem, the present invention is directed to a non-aqueous electrolyte battery that a positive electrode plate which a positive electrode mixture layer including an active material is formed at a collector and a negative electrode plate which a negative electrode mixture layer including an active material is formed at a collector are disposed via a porous separator, wherein a flame retardant layer containing a flame retardant is formed at one side or both sides of at least one kind of the positive electrode plate, the negative electrode plate and the separator, and wherein a carbon material which has electron conductivity and of which mass ratio to the flame retardant is 25% or less is contained in the flame retardant layer.

In the present invention, it is preferable that the mass ratio to the flame retardant of the carbon material contained in the flame retardant layer is 1% ormore. Further, it is more preferable that the mass ratio to the flame retardant of the carbon material contained in the flame retardant layer ranges from 2% to 20%. The flame retardant layer may be formed at one side or both sides of the positive electrode plate or the negative electrode plate, and a thickness of the flame retardant layer may be 20% or less to that of the positive electrode mixture layer or the negative electrode mixture layer. The carbon material contained in the flame retardant layer can be one kind or a combination of at least two kinds selected from graphite, carbon black, acetylene black, carbon nanotube and glassy carbon. The graphite may be one kind or a combination of at least two kinds selected from scale graphite, artificial graphite and earthy graphite.

### [Effects of the Invention]

According to the present invention, effects can be obtained that, since the flame retardant restricts burning of a battery constituting material when a temperature goes up due to battery abnormality because the flame retardant layer containing the flame retardant is formed at one side or both sides of at least one kind of the positive electrode plate, the negative electrode plate and the separator, battery behavior becomes calm and safety of the battery can be secured; and since the carbon material which has electron conductivity and of which mass ratio to the flame retardant is 25% or less is contained in the flame retardant layer, a drop in a charge/discharge property can be restricted.

### BRIEF DESCRIPTION OF THE DRAWINGS

Fig. 1 is a sectional view of a cylindrical lithium-ion secondary battery of an embodiment to which the present invention is applicable; and
Fig. 2 is a graph showing an 1C discharge capacity ratio with respect to lithium-ion batteries of Examples and Controls manufactured by changing a mass ratio of a carbon material to a flame retardant.

### DETAILED DESCRIPTION OF THE PREFERRED EMBODIMENTS

With reference to the drawings, an embodiment in which the present invention is applied to a cylindrical lithium-ion secondary battery mounted for a hybrid vehicle will be explained below.

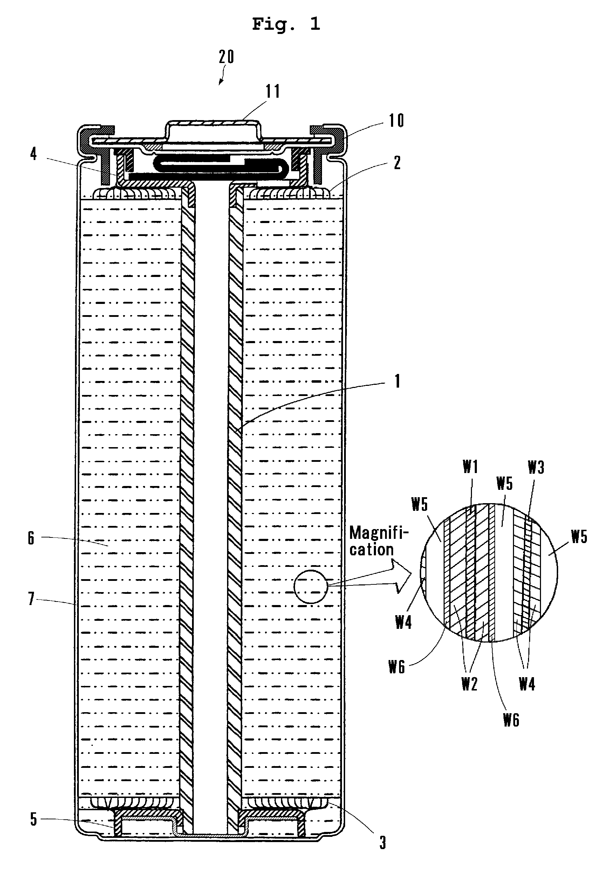

As shown in Fig. 1, a cylindrical lithium-ion secondary battery (non-aqueous electrolyte battery) 20 of this embodiment has a cylindrical battery container 7 made of nickel plated steel and having abottom. An electrode group 6 formed by winding a strip-shaped positive electrode plate and a strip-shaped negative electrode plate spirally in a cross-section via a separator is accommodated in the battery container 7.

A hallow cylindrical rod core 1 made of polypropylene is used at a winding center of the electrode group 6. Apositive electrode collecting ring 4 which is a ring-shaped conductor and for collecting electric potential from the positive electrode plate is disposed at an upper side of the electrode group 6 approximately on an extension line of the rod core 1. The positive electrode collecting ring 4 is fixed to an upper end portion of the rod core 1. Each end portion of positive electrode lead pieces 2 led from the positive electrode plate is welded by ultrasonic welding to a peripheral face of a flange portion extended integrally from a periphery of the positive electrode collecting ring 4. A disc-shaped battery lid 11 which houses a safety valve and which functions as a positive electrode external terminal is disposed at an upper side of the positive electrode collecting ring 4. An upper portion of the positive electrode collecting ring 4 is connected to the battery lid 11 via a conductive lead.

On the other hand, a negative electrode collecting ring 5 which is a ring-shaped conductor and for collecting electric potential from the negative electrode plate is disposed at a lower side of the electrode group 6. An outer circumference of a lower end of the rod core 1 is fixed to an inner circumference of the negative electrode collecting ring 5. Each end portion of negative electrode lead pieces 3 led from the negative electrode plate is welded by ultrasonic welding to an outer periphery of the negative electrode collecting ring 5. A lower side of the negative electrode collecting ring 5 is connected to an inner bottom portion of the battery container 7 via a conductive lead. In this embodiment, an outer diameter of the battery container 7 is set to 40mm and an inner diameter thereof is set to 39mm.

The battery lid 11 is fixed by performing caulking via a gasket 10 made of EPDMhaving insulation and heat resisting properties at an upper portion of the battery container 7. For this reason, an interior of the lithium-ion secondarybattery20 is sealed. Further, a non-aqueous electrolyte (electrolytic solution) is injected to the battery container 7. Lithium hexafluorophosphate (LiPF₆) as a lithium salt, added at 1 mole/liter to a mixed solvent of ethylene carbonate (EC), dimethyl carbonate (DMC) and diethyl carbonate (DEC) mixed at a volume ratio of 1:1:1, is used for the non-aqueous electrolyte. Incidentally, the lithium-ion secondary battery 20 is given a function as a battery by carrying out initial charge with a predetermined voltage and current.

The electrode group 6 is made in a manner that the positive electrode plate and the negative electrode plate are wound together via a porouspolyethylene-madeseparator W5 through whichlithium-ions can pass around the rod core 1 such that the both electrode plates do not come in direct contact with each other. In this embodiment, a thickness of each of the separators W5 is set to 30µm. The positive electrode lead pieces 2 and the negative electrode lead pieces 3 are respectively positioned at both end faces opposed to each other with respect to the electrode group 6. In this embodiment, the lengths of the positive electrode plate, the negative electrode plate and the separator W5 are adjusted in order to set a diameter of the electrode group 6 to 38 ± 0.5mm. Insulating covering or coating is applied to the entire circumference of the electrode group 6 and the peripheral face of the flange portion of the positive electrode collecting ring 4 in order to prevent electric contact between the electrode group 6 and the battery container 7. An adhesive tape having a base member made of polyimide and adhesive agent made of hexameta-acrylate applied to one surface thereof is used for the insulating covering. The adhesive tape is wound at least one time from a peripheral surface of the flange portion to an outer peripheral surface of the electrode group 6. The winding number is adjusted so that a maximum diameter portion of the electrode group 6 is set as an insulating covering existence portion, and the maximum diameter is set to be slightly smaller than the inner diameter of the battery container 7.

The positive electrode plate constituting the electrode group 6 has an aluminum foil (collector) W1 as a positive electrode collector. In this embodiment, a thickness of the aluminum foil W1 is set to 20µm. A positive electrode mixture is applied to both surfaces of the aluminum foil W1 approximately uniformly and homogeneously to form a positive electrode mixture layer W2. Alithium transition metal complex oxide as a positive electrode active material is included in the positive electrode mixture. A thickness of the formed positive electrode mixture layer W2 is approximately uniform and the positive electrode mixture is dispersed in the positive electrode mixture layer W2 approximately uniformly. For example, lithium manganese nickel cobalt complex oxide powder having a layered crystal structure or lithiummanganate powder having a spinel crystal structure can be used for the lithium transition metal complex oxide. For example, 8wt% of scale-shaped graphite and 2wt% of acetylene black as a conductive material, and 5wt% of polyvinylidene fluoride (hereinafter abbreviated as PVdF) as a binder, to 85wt% (weight parts) of the lithium transition metal complex oxide, aremixed in the positive electrode mixture. N-methyl-2-pyrolidone (hereinafter abbreviated as NMP) as a dispersion solvent is used for applying the positive electrode mixture to the aluminum foil W1. A non-applied portion of the positive electrode mixture, with a width of 30mm, is formed at one side edge along a longitudinal direction of the aluminum foil W1. The non-applied portion is notched like a comb, and the positive electrode lead pieces 2 are formed by notched remaining portions thereof. A distance or an interval between the adjacent positive electrode lead pieces 2 is set to 20mm and a width of each of positive electrode lead pieces 2 is set to 5mm. The positive electrode plate, after drying, is pressed and then cut to have a width of 80mm.

Further, a flame retardant layer W6 containing a flame retardant is formed at a surface of the positive electrode mixture layer W2, namely, both surfaces of the positive electrode plate. A thickness of the flame retardant layer W6 is set to 20% or less to a thickness of the positive electrode mixture layer W2. A carbon material having electron conductivity is mixed to the flame retardant layer W6, and the flame retardant layer W6 is made porous so as to have lithium-ion permeability by mixing a pore former (pore forming material) thereto. A phosphazene compound of whichmain constituents are phosphorus and nitrogen is used for the flame retardant. A mixing ratio (percentage) of the flame retardant is set, in this embodiment, to 1wt% or more to the positive electrode mixture. Acetylene black is used as the carbon material contained in the flame retardant layer W6. A mass ratio (weight percentage) of the carbon material to the flame retardant is set to a range of from 1 to 25wt%. An aluminum oxide is used for the pore former. A mixing ratio of the aluminum oxide can be adjusted to fit a ratio of pores to be formed at the flame retardant layer W6. This flame retardant layer W6 is formed as follows. Namely, the acetylene black and the aluminum oxide are dispersed to a NMP solution into which the phosphazene compound and PVdF of a binder are dissolved. The obtained dispersion is applied to a surface of the positive electrode mixture layer W2, and then the positive electrode plate, after drying, is pressed in order to adjust a thickness thereof as a whole.

The phosphazene compound is a cyclic compound expressed by a general formula of (NPR₂) or (NPR₂)₄. R in the general formula expresses halogen such as fluorine, chlorine and the like or univalent substituent. As the univalent substituent, alkoxy group such as methoxy group, ethoxy group and the like, aryloxyl group such as phenoxy group, methylphenoxy group and the like, alkyl group such as methyl group, ethyl group and the like, aryl group such as phenyl group, tolyl group and the like, amino group including substitutional amino group such as methylamino group and the like, alkylthio group such as methylthio group, ethylthio group and the like, and arylthio group such as phenylthio group and the like may be listed. The phosphazene compound has a solid state or liquid state according to a kind of the substituent, and in this embodiment, a phosphazene compound having a solid state under a thermal temperature of 80 deg. C. or less. Further, these phosphazene compounds decompose thermally at a predetermined temperature, respectively.

On the other hand, the negative electrode plate has a rolled copper foil (collector) W3 as a negative electrode collector. In this embodiment, a thickness of the rolled copper foil W3 is set to 10µm. A negative electrode mixture is applied to both surfaces of the rolled copper foil W3 approximately uniformly and homogeneously in the same manner as the positive electrode plate. A carbon material served as a negative electrode active material in/from which lithium-ions can be occluded/released is included in the negative electrode mixture. In this embodiment, amorphous carbon power is used for the carbon material of the negative electrode active material. For example, 10wt% of PVdF as a binder is added, to 90wt% of the amorphous carbon powder, in the negative electrode mixture. NMP as a dispersion solvent is used for applying the negative electrode mixture to the rolled copper foil W3. A non-applied portion of the negative electrode mixture, with a width of 30mm, in the same manner as the positive electrode plate, is formed at one side edge along a longitudinal direction of the rolled copper foil W3 to form the negative electrode lead pieces 3. A distance between the adjacent negative electrode lead pieces 3 is set to 20mm and a width of each of negative electrode lead pieces 3 is set to 5mm. The negative electrode plate, after drying, is pressed and then cut to have a width of 86mm. Incidentally, a length of the negative electrode plate is set, when the positive electrode plate and the negative electrode plate are wound, 120mm longer than that of the positive electrode plate such that the positive electrode plate does not go beyond the negative electrode plate in a winding direction at innermost and outermost winding circumferences. Besides, a width of the negative electrode mixture layer W4 (applied portion of the electrode mixture) is set 6mm longer than that of the positive electrode mixture layer W2 such that the positive electrode mixture layer W2 does not go beyond the negative electrode mixture layer W4 in a winding direction and a vertical direction.

### (Examples)

Next, Examples of the lithium-ion secondary battery 20 manufactured according to the above embodiment will be explained. Incidentally, lithium-ion secondary batteries of Controls (Comparative Examples) and Reference Examples manufactured for making a comparison with Examples will also be explained.

### (Example 1)

In Example 1, a dispersion that an aluminum oxide and acetylene black (made by DENKI KAGAKU KOGYO KABUSHIKI KAISHA, Product Name: DENKA BLACK HS100) of a carbon material are dispersed to a NMP solution into which a phosphazene compound (made by BRIDGESTONE CORP., Product Name: Phoslight (Registered Trademark), solid state, decomposition temp. : 250 deg. C. or more) of a flame retardant and PVdF are dissolved was produced. At this time, as shown in Table 1 below, the mass ratio of the carbon material to the flame retardant was adjusted to a ratio (percentage) of 1%. This dispersion was applied to the surface of the positive electrode mixture layer W2 and the applying amount of the dispersion was adjusted to set the mixing ratio of the flame retardant to the positive electrode mixture to the ratio of 1wt%.

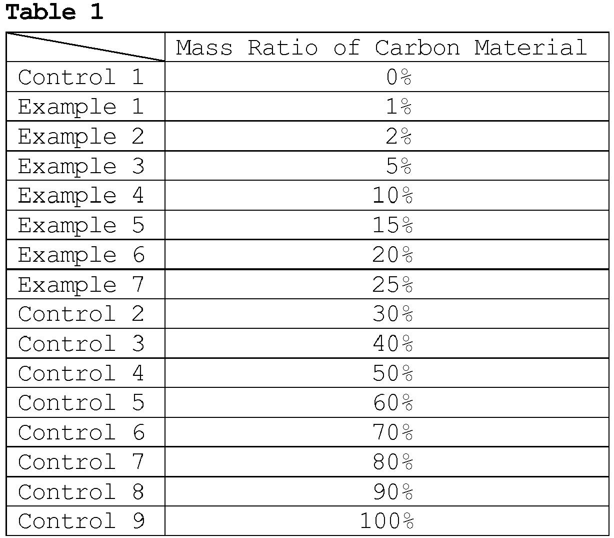

### (Example 2 to Example 7)

As shown in Table 1, in Examples 2 to 7, the batteries were manufactured in the same manner as Example 1 except changing the mass ratio of the carbon material to the flame retardant in a range of from 2 to 25%. Namely, the mass ratio of the carbon material was adjusted to 2% in Example 2, 5% in Example 3, 10% in Example 4, 15% in Example 5, 20% in Example 6 and 25% in Example 7, respectively.

### (Control 1 to Control 9)

As shown in Table 1, in Control 1, the battery was manufactured in the same manner as Example 1 except that no carbon material is included in the flame retardant. Namely, the lithium-ion secondary battery of Control 1 is a battery of which mass ratio of the carbon material to the flame retardant is 0%. In Controls 2 to 9, the batteries were manufactured in the same manner as Example 1 except changing the mass ratio of the carbon material to the flame retardant in a range of from 30 to 100% . Namely, the mass ratio of the carbon material was adjusted to 30% in Control 2, 40% in Control 3, 50% in Control 4, 60% in Control 5, 70% in Control 6, 80% in Control 7, 90% in Control 8 and 100% in Control 9, respectively.

### (Test 1)

The following measurement and test were carried out with respect to each lithium-ion secondarybattery of Examples and Controls . A discharge capacity was measured at 700mA (1C) under an environmental temperature of 25 deg. C, and a discharge capacity ratio of each lithium-ion secondary battery of Examples and Controls other than Control 1 was calculated by defining an 1C discharge capacity of the lithium-ion secondary battery of Control 1 of which mass ratio of the carbon material to the flame retardant as 100%.

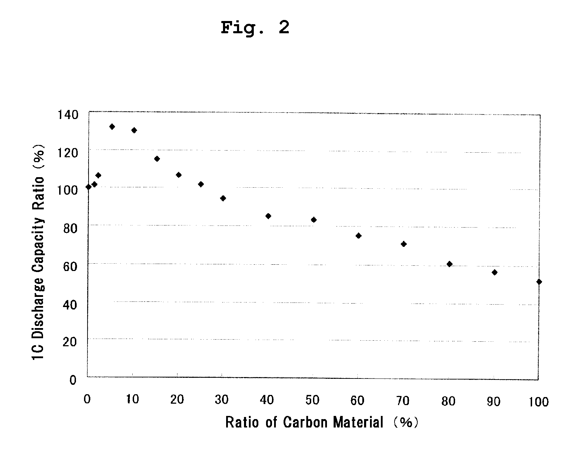

As shown in Fig. 2, in comparison with the discharge capacity ratio of Control 1 of which mass ratio of the carbon material is 0%, each discharge capacity ratio of Examples 1 to 7 and Controls 2 to 9 of which mass ratio of the carbon material is increased exhibited a property that, after the discharge capacity ratio is once increased, it is decreased gradually. Namely, in Controls 2 to 9 of which mass ratio of the carbon material is larger than 25%, the discharge capacity ratio was smaller than 100%, and the discharge capacity ratio was decreased gradually as the mass ratio of the carbon material becomes larger. By contrast, in each battery of Examples 1 to 7 of which mass ratio of the carbon material falls into a range of from 1% to 25%, each discharge capacity ratio exceeded 100% and it was 102% or more. Further, in the batteries of Examples 2 to 6 of which mass ratio of the carbon material falls into a range of from 2% to 20%, the mass ratio was 107% or more which is a larger value than 102%. Furthermore, in the lithium-ion secondary battery of Example 3 of which mass ratio of the carbon material is 5%, the discharge capacity ratio was 133% and it is a maximum value. From the above, it was found that a drop in a discharge property can be restricted in a case that the carbon material which has electron conductivity and of which mass ratio to the flame retardant is 25% or less is contained in the flame retardant layer. It was also considered that, in a case that the mass ratio of the carbon material is larger than 25%, because the thickness of the flame retardant layer becomes large relatively, the capacity or output dropped, which brought about lowering in the discharge capacity ratio.

### (Test 2)

An overcharge test was carries out to evaluate safety with respect to each lithium-ion secondarybattery of Examples and Controls . In the overcharge test, a thermocouple was disposed at a center of each of the lithium-ion secondary batteries to measure a temperature at each surface of the batteries when each of the batteries was being overcharged at a current value of 0.5C. Table 2 below shows the highest temperature of each surface of the batteries in the overcharge test.

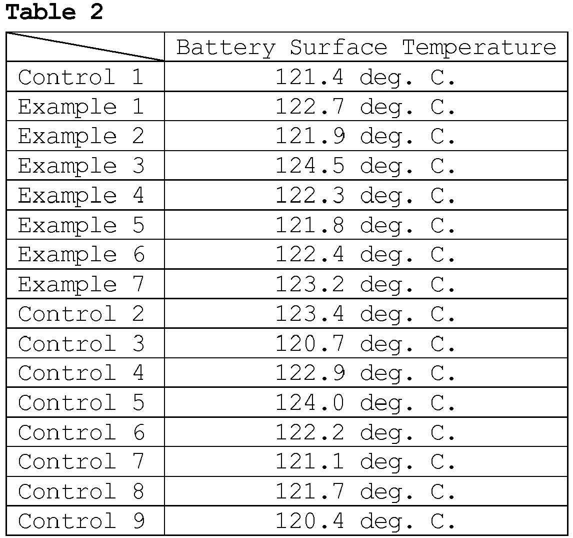

As shown in Table 2, in Control 1 that no carbon material is included in the flame retardant layer, the surface temperature exhibited 121.4 deg. C. There was only a slight temperature difference in Examples 1 to 7 and Controls 2 to 9 that the carbon material is included in the flame retardant layer comparing with Control 1. Accordingly, it can be judged that an increase in the battery surface temperature due to that the carbon material is included in the flame retardant layer falls into a scope that safety of the battery can be secured.

### (Reference Example 1 to Reference Example 9)

Each battery of Reference Examples 1 to 9 was purposed to evaluate the effects of the flame retardant, and was manufactured in the same manner as Example 1 except that no carbon material is included in the flame retardant layer W6 and the mixing ratio of the flame retardant to the positive electrode mixture is changed. As shown in Table 3 below, the mixing ratio of the flame retardant was adjusted to 1wt% in Reference Example 1, 2wt% in Reference Example 2, 3wt% in Reference Example 3, 5wt% in Reference Example 4, 6wt% in Reference Example 5, 8wt% in Reference Example 6, 10wt% in Reference Example 7, 15wt% in Reference Example 8 and 20wt% in Reference Example 9, respectively.

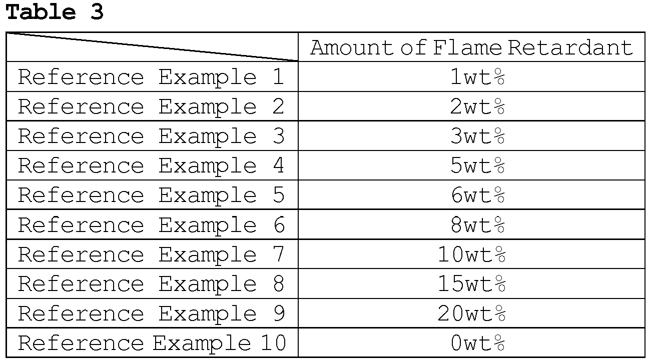

### (Reference Example 10)

As shown in Table 3, in Reference Example 10, the battery was manufactured in the same manner as Example 1 except that no flame retardant layer W6 is formed at the surface of the positive electrode mixture layer W2. Namely, the lithium-ion secondary battery of Reference Example 10 is a conventional battery.

### (Test)

An overcharge test was carried out to evaluate safety with respect to each lithium-ion secondary battery of Reference Examples. In the overcharge test, a thermocouple was disposed at a center of each of the lithium-ion secondary batteries to measure a temperature at each surface of the batteries when each of the batteries was being overcharged at a current value of 0.5C. Table 4 below shows the highest temperature of each surface of the batteries in the overcharge test.

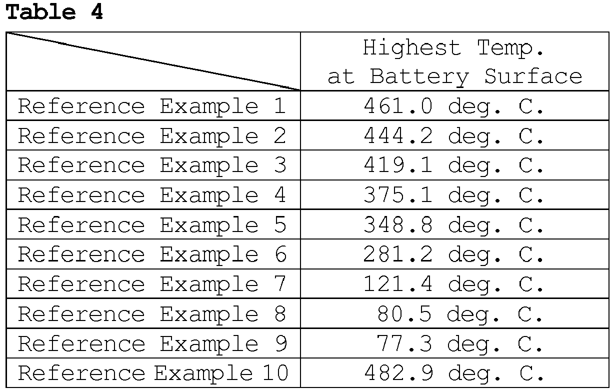

As shown in Table 4, in the lithium-ion secondary battery of Reference Example 10 in which the flame retardant layer W6 is not formed, the highest temperature at the battery surface reached 482.9 deg. C. according to the overcharge test. While, it was understood, in the lithium-ion secondary batteries of Reference Examples 1 to 9 in which the flame retardant is contained in the flame retardant layer W6, that the highest temperature at each of the battery surfaces is lowered and that a lowering ratio of the highest temperature becomes large by making the mixing ratio of the flame retardant large. If the flame retardant is mixed at 1wt% to the positive electrode mixture (Reference Example 1), the lithium-ion secondary battery can lower the highest temperature at a battery surface thereof comparing with the lithium-ion secondary battery of Reference Example 10. When a thermal decomposition reaction of the active material or a chain reaction thereof is considered, it is preferable that the highest temperature at the battery surface is controlled at approximately 150 deg. C. or less. This can be attained by setting the mixing percentage of the flame retardant to 10wt% or more. (Reference Example 7 to Reference Example 9)

### (Effects and the like)

Next, effects and the like of the lithium-ion secondary battery 20 according to this embodiment will be explained.

In this embodiment, the flame retardant layer W6 in which the phosphazene compound served as a flame retardant is contained is formed at the surface of the positive electrode mixture layer W2 of the positive electrode plate constituting the electrode group 6. This phosphazene compound decomposes at the predetermined temperature under the high thermal environment such as the time of battery abnormality and the like. The phosphazene compound exists near the positive electrode active material because the flame retardant layer W6 is formed at the surface of the positive electrode mixture layer W2. For this reason, in a case that the lithium-ion secondary battery 20 is exposed under an abnormal high thermal environment or falls into battery abnormality, when the battery temperature goes up due to the thermal decomposition reaction of the positive electrode active material or a chain reaction thereof, the phosphazene compound decomposes. Thus, since the burning of a battery constituting material is restricted, it is possible to make battery behavior calm to secure safety of the lithium-ion secondary battery 20.

Further, in this embodiment, acetylene black which has electron conductivity and of which mass ratio to the flame retardant is 25% or less is contained in the flame retardant layer W6. For this reason, even if the flame retardant layer W6 is formed at the surface of the positive electrode mixture layer W2, the drop in the charge/discharge property can be restricted. Furthermore, the pores are formed at the flame retardant layer W6, and thereby the flame retardant layer W6 is made porous. For this reason, lithium-ions can move between the positive and negative electrodes sufficiently at the time of normal battery use (charge/discharge) so that battery performance can be secured. Moreover, because the flame retardant layer W6 is formed at the surface of the positive electrode mixture layer W2, the mixing ratio of the positive electrode active material which causes an electrode reaction can be secured in the positive electrode mixture layer W2, and accordingly the capacity or output of the lithium-ion secondary battery can be secured.

Furthermore, in this embodiment, the thickness of the flame retardant layer W6 is set to 20% or less to the thickness of the positive electrode mixture layer W2. Therefore, even if the flame retardant layer W6 is formed at the surface of the positive electrode mixture layer W2, because the thickness of the flame retardant layer W6 is set to the thickness of a degree that the movement of lithium-ions between the positive and negative electrodes is not hampered at the time of battery charge/discharge, charge/discharge performance of the lithium-ion secondary battery 20 can be secured.

Incidentally, in this embodiment, an example that the flame retardant layer W6 is formed at the surface of the positive electrode mixture layer W2, namely, both surfaces of the positive electrode plate was shown, however, the present invention is not limited to this. For example, the flame retardant layer W6 may be formed at the negative electrode plate or the separator W5. Further, the flame retardant layer W6 may be formed at only one surface of at least one of the positive electrode plate, the negative electrode plate and the separator W5. Moreover, in this embodiment, an example that the flame retardant layer W6 is formed by using PVdF as a binder was shown, however, the present invention is not limited to the same. Any binder by which the flame retardant layer W6 can be formed may be used.

Further, in this embodiment, an example that the aluminum oxide is mixed as a pore former at the time of forming the flame retardant layer W6 was shown, however, the present invention is not confined to the same. It is sufficient that the flame retardant layer W6 is made porous so that lithium-ions can pass the flame retardant layer W6 at the normal charge/discharge time. The present invention is not limited to the pore former to be used, and the pore former may not be used.

Furthermore, in this embodiment, an example that the ratio of the flame retardant mixed to the flame retardant layer W6 is set to 1wt% or more was shown. (Reference Examples 1 to 9) If the mixing ratio of the flame retardant is less than 1wt%, it is difficult to restrict the temperature increase due to the thermal decomposition reaction. To the contrary, if the mixing ratio exceeds 20wt%, the capacity or output drops due to that the thickness of the flame retardant layer W6 becomes large relatively. For this reason, it is preferable that the mixing ratio of the flame retardant is set to a range of from 1 to 20wt%. Further, when restricting a further temperature increase due to the chain reaction of the thermal decomposition reaction is considered, it is more preferable that the mixing ratio of the flame retardant is set to 10wt% or more.

Further, in this embodiment, the mass ratio of the carbon material to the flame retardant is set to the range of from 1 to 25% was shown. (Examples 1 to 7) If the mass ratio of the carbon material is less than 1%, the charge/discharge property is apt to drop because the flame retardant layer W6 is formed at the surface of the positive electrode mixture layer W2. To the contrary, if the mass ratio exceeds 25%, the charge/discharge property drops due to that the thickness of the flame retardant layer W6 becomes large relatively. Further, in this embodiment, when the mass ratio of the carbon material is set to the range of from 2 to 20%, the charge/discharge property was improved. (Examples 2 to 6) For this reason, it is more preferable that the mass ratio of the carbon material is set to the range of from 2 to 20%.

Moreover, in this embodiment, an example of the phosphazene compound as a flame retardant was shown. However, the present invention is not limited to this, and any flame retardant which decomposes at a predetermined temperature and which is capable of restricting the temperature increase due to the thermal decomposition reaction and the chain reaction may be used. Further, with respect to the phosphazene compound, a compound other than the compound shown in this embodiment may be used.

Further, in this embodiment, an example of acetylene black was shown as a carbon material contained in the flame retardant W6, however, the present invention is not limited to this. The carbon material may be one kind or a combination of at least two kinds selected from graphite, carbon black, carbon nanotube and glassy carbon. In a case that graphite is used as the carbon material, one kind or a combination of at least two kinds selected from scale graphite, artificial graphite and earthy graphite may be used as the carbon material.

Furthermore, in this embodiment, an example of the cylindrical lithium-ion secondary battery 20 mounted for a hybrid vehicle was shown, however the present invention is not restricted to this. The present invention is applicable to a large sized lithium-ion secondary battery having a battery capacity exceeding about 3Ah. Further, in this embodiment, an example of the electrode group 6 formed by winding the positive electrode plate and the negative electrode plate was shown, however the present invention is not limited to the same. For example, the electrode group may be formed by laminating rectangular positive electrode plates and negative electrode plates. Furthermore, it is without saying that, with respect to a battery shape, a square shape or the like other than the cylindrical shape may be employed.

Moreover, in this embodiment, an example that either the lithium manganese nickel cobalt complex oxide powder having a layered crystal structure or the lithium manganate powder having a spinel crystal structure is used as a lithium transition metal complex oxide was shown, however, other lithium transition metal complex oxides maybe used as the positive electrode active material in this invention. Further, a kind of the negative electrode active material or a composition of the non-aqueous electrolyte is not limited to the shown one, too. Furthermore, the present invention is not limited to a lithium-ion secondary battery, and it goes without saying that the present invention is applicable to a non-aqueous electrolyte battery using a non-aqueous electrolyte.

### (Industrial Applicability)

Because the present invention provides a non-aqueous electrolyte capable of securing safety at a time of battery abnormality and restricting a drop in a charge/discharge property at a time of battery use, the present invention contributes to manufacturing and marketing of a non-aqueous electrolyte battery. Accordingly, the present invention has industrial applicability.

## Claims

1. A non-aqueous electrolyte battery that a positive electrode plate which a positive electrode mixture layer including an active material is formed at a collector and a negative electrode plate which a negative electrode mixture layer including an active material is formed at a collector are disposed via a porous separator, wherein a flame retardant layer containing a flame retardant is formed at one side or both sides of at least one kind of the positive electrode plate, the negative electrode plate and the separator, and wherein a carbon material which has electron conductivity and of which mass ratio to the flame retardant is 25% or less is contained in the flame retardant layer.

2. The non-aqueous electrolyte battery according to claim 1, wherein the mass ratio to the flame retardant of the carbon material contained in the flame retardant layer is 1% or more.

3. The non-aqueous electrolyte battery according to claim 2, wherein the mass ratio to the flame retardant of the carbon material contained in the flame retardant layer ranges from 2% to 20%.

4. The non-aqueous electrolyte battery according to claim 3, wherein the flame retardant layer is formed at one side or both sides of the positive electrode plate or the negative electrode plate, and wherein a thickness of the flame retardant layer is 20% or less to that of the positive electrode mixture layer or the negative electrode mixture layer.

5. The non-aqueous electrolyte battery according to claim 1, wherein the carbon material contained in the flame retardant layer is one kind or a combination of at least two kinds selected from graphite, carbon black, acetylene black, carbon nanotube and glassy carbon.

6. The non-aqueous electrolyte battery according to claim 5, wherein the graphite is one kind or a combination of at least two kinds selected from scale graphite, artificial graphite and earthy graphite.
